# EUROPÄISCHE PATENTSCHRIFT

(11) **EP 4 241 004 B1**
(45) Veröffentlichungstag und Bekanntmachung des Hinweises auf die Patenterteilung: **25.02.2026**
(21) Anmeldenummer: 21802696.1
(22) Anmeldetag: 02.11.2021
(51) Int. Cl.: F16L 11/112, F16L 11/15, B29C 48/00, B29D 23/00, B32B 25/10

(54) **HOCHDRUCK-FLUIDLEITUNG**
HIGH-PRESSURE FLUID LINE
CONDUIT DE FLUIDE HAUTE PRESSION

(30) Priorität: 04.11.2020 DE 102020129048
(43) Veröffentlichungstag der Anmeldung: 13.09.2023
(73) Patentinhaber: Fränkische Industrial Pipes GmbH & Co. KG, 97486 Königsberg (DE)
(72) Erfinder: KRAUSS, Manfred, 97265 Hettstadt (DE); SPIELBERG, Daniel, 90480 Nürnberg (DE); BLÜMMERT, Dominik, 97486 Köningsberg in Bayern (DE); JURISCHKA, Mike, 97421 Schweinfurt (DE); SCHRÖTER, Sören, 96103 Hallstadt (DE)
(74) Vertreter: Weickmann & Weickmann PartmbB
(86) Internationale Anmeldenummer: PCT/EP2021/080343
(87) Internationale Veröffentlichungsnummer: WO 2022/096437

(56) Entgegenhaltungen:
- DE-A1- 102013 200 579
- GB-A- 1 283 216
- US-A1- 2020 025 319
- US-B2- 6 983 769
- US-B2- 7 556 065

## Beschreibung

Die vorliegende Erfindung betrifft eine Hochdruck-Fluidleitung, welche ein Wellrohr umfasst, welches in seinem Inneren einen Fluidströmungskanal definiert, und dessen Wandung, parallel zu der Erstreckungsrichtung des Fluidströmungskanals, eine Abfolge von Wellenbergen und Wellentälern umfasst.

Es ist bei Wellrohren allgemein bekannt, dass, bei einem steigenden Innendruck, zuerst deren Länge und dann der Durchmesser der Wellrohre zunimmt. Aus diesem Grund sind Wellrohre oft ungeeignet, um als Hochdruck-Fluidleitung eingesetzt zu werden.

Aus dem Dokument US2020025319A1 ist eine Hochdruck-Fluidleitung bekannt, bei welcher ein Wellrohr an einer radial äußeren Seite von einem Geflecht von Fäden mit einem im Wesentlichen konstanten Flechtwinkel umgeben ist. Ferner sei auf die Dokumente US6983769B2, GB1283216A, US7556065B2 und DE102013200579A1 hingewiesen.

Es ist daher die Aufgabe der vorliegenden Erfindung, eine ein Wellrohr umfassende Hochdruck-Fluidleitung bereitzustellen, welche insbesondere verbesserte Eigenschaften für einen Einsatz zum Transport von unter hohem Druck stehenden Fluiden geeignet ist.

Diese Aufgabe wird durch eine Hochdruck-Fluidleitung gelöst, umfassend ein Wellrohr, welches in seinem Inneren einen Fluidströmungskanal definiert, und dessen Wandung, parallel zu der Erstreckungsrichtung des Fluidströmungskanals, eine Abfolge von Wellenbergen und Wellentälern umfasst, und
ein Geflecht aus Fäden, welches auf einen Außenumfang des Wellrohrs aufgebracht ist,
wobei das Geflecht eng an dem Außenumfang des Wellrohrs anliegt,
wobei das Geflecht über das gesamte Wellrohr hinweg einen im Wesentlichen konstanten Flechtwinkel aufweist,
wobei das Geflecht und das Wellrohr wenigstens an zwei voneinander getrennten Stellen, insbesondere im Bereich der beiden Längsenden des Wellrohrs, derart miteinander verbunden sind, dass eine Streckung des Wellrohrs in Längsrichtung mit einer Durchmesserreduktion des Geflechts einhergeht.

Alternativ wird die Aufgabe erfindungsgemäß durch eine Hochdruck-Fluidleitung gelöst, umfassend
ein Wellrohr, welches in seinem Inneren einen Fluidströmungskanal definiert, und dessen Wandung, parallel zu der Erstreckungsrichtung des Fluidströmungskanals, eine Abfolge von Wellenbergen und Wellentälern umfasst, und
ein Geflecht aus Fäden, welches auf einen Außenumfang des Wellrohrs aufgebracht ist,
wobei das Geflecht eng an dem Außenumfang des Wellrohrs anliegt,
wobei das Geflecht über das gesamte Wellrohr hinweg einen im Wesentlichen konstanten Flechtwinkel aufweist,
wobei das Geflecht im Bereich von Wellentälern eine kleinere Maschengröße aufweist als im Bereich von Wellenbergen,
wobei die Hochdruck-Fluidleitung dazu eingerichtet ist, dass eine Streckung des Wellrohrs in Längsrichtung mit einer Durchmesserreduktion des Geflechts einhergeht.

Die beiden Alternativen können gleichermaßen als erfindungsgemäße Lösung der Aufgabe angesehen werden. Das heißt die Merkmale, dass das Geflecht und das Wellrohr wenigstens an zwei voneinander getrennten Stellen, insbesondere im Bereich der beiden Längsenden des Wellrohrs, miteinander verbunden sind, und dass das Geflecht im Bereich von Wellentälern eine kleinere Maschengröße aufweist als im Bereich von Wellenbergen, müssen nicht, aber können gegebenenfalls natürlich, in einer erfindungsgemäßen Fluidleitung gemeinsam realisiert werden.

An dieser Stelle sei angemerkt, dass sich der Größenunterschied zwischen einer Masche des Geflechts, welche im Bereich eines Wellenbergs der Fluidleitung angeordnet ist, und einer Masche, welche im Bereich eines Wellentals angeordnet ist, an dem Unterschied des Wellrohrumfangs zwischen Wellenberg und Wellental orientieren kann, das heißt sich proportional zu einer Außendurchmesseränderung der Fluidleitung von einem Wellenberg zu einem Wellental ändern kann. Eine Maschengröße im Bereich eines Wellentals kann insbesondere zwischen 60% und 85%, vorzugsweise zwischen 70% und 75%, einer Maschengröße im Bereich eines Wellenbergs betragen.

Die Längsrichtung soll hier als eine zu der Erstreckungsrichtung des Fluidströmungskanals parallel verlaufende Richtung verstanden werden.

Wie eingangs erwähnt, neigt das Wellrohr dazu, auf einen steigenden Innendruck hin, an Länge zuzunehmen, womit aber bei der erfindungsgemäßen Fluidleitung auch das das Wellrohr umgebende Geflecht gestreckt wird und sich in der Art eines Scherenmechanismus bezüglich seines Durchmessers zusammenzieht. Dieser Durchmesserreduktion wirkt einerseits der Druck des Fluids von der Seite des Fluidströmungskanals des Wellrohrs entgegen und andererseits bietet das Material, aus welchem das Wellrohr hergestellt ist, einen Widerstand gegen die Durchmesserreduktion des Geflechts.

Durch das Zusammenziehen des Geflechts stellt sich ein Kräftegleichgewicht dahingehend ein, dass sich das Wellrohr nicht mehr verlängern kann, wenn es nicht mehr in seinem Durchmesser reduziert werden kann, und dass sich das Wellrohr nicht mehr radial ausdehnen kann, wenn es nicht auch zugleich verkürzt werden kann.

Aufgrund dieses Kräftegleichgewicht können erfindungsgemäße Hochdruck-Fluidleitungen bereitgestellt werden, welche einem Vielfachen des Innendrucks von herkömmlichen Wellrohren standhalten können. So wurden in durchgeführten Experimenten mit erfindungsgemäßen Hochdruck-Fluidleitungen Drücke von bis zu 100 bar erreicht. Da bei derart hohen Drücken die an einer erfindungsgemäßen Hochdruck-Fluidleitung angebrachten Anschlussstücke den begrenzenden Faktor darstellen, konnte in den Experimenten eine tatsächliche Belastungsobergrenze der erfindungsgemäßen Hochdruck-Fluidleitungen selbst noch nicht erreicht werden.

Eine Masche des Geflechts soll als ein Bereich verstanden werden, welcher zwischen zueinander benachbarten und/oder sich schneidenden Fäden des Geflechts gebildet ist. Insbesondere ist dieser Bereich frei von durch diesen verlaufenden Fäden. Beispielsweise kann eine derartige Masche im Wesentlichen rautenförmig ausgebildet sein, das heißt von vier Fäden begrenzt werden, welche zwei Paare von jeweils zwei parallel zueinander verlaufenden Fäden bilden, wobei die Fäden des einen Paares die Fäden des anderen Paares kreuzen.

In Bezug auf die voranstehend erwähnte zweite Alternative, bei welcher das Geflecht im Bereich von Wellentälern eine kleinere Maschengröße aufweist als im Bereich von Wellenbergen, kann eine kleinere Maschengröße auch mit einem kleineren Außendurchmesser des Geflechts einhergehen, so dass das Geflecht in einem Bereich, welcher zu einem jeweiligen Wellenberg radial außen benachbart ist, einen größeren Durchmesser aufweist als in einem Bereich, welcher zu einem jeweiligen Wellental radial außen benachbart ist.

Insbesondere kann der Flechtwinkel im Bereich von 30° bis 60°, insbesondere bei etwa 45°, liegen. Hierdurch kann ein Kräftegleichgewicht zwischen Durchmesser- und Längenänderungen in einer gewünschten Weise eingestellt werden.

Ferner kann das Geflecht eine erste Gruppe an Fäden und eine zweite Gruppe an Fäden umfassen, wobei die erste Gruppe an Fäden und die zweite Gruppe an Fäden in entgegengesetzten Wicklungsrichtungen um das Wellrohr verlaufen. Insbesondere verlaufen die Fäden einer jeweiligen Gruppe im Wesentlichen parallel zueinander.

Vorteilhafterweise kann ein jeweiliger Faden als Monofilament und/oder als Multifilament ausgebildet sein. Bei Monofilamenten kann dies den Vorteil haben, dass die Struktur und somit die belastungsabhängigen Eigenschaften eines Fadens eindeutig definiert sind. Multifilamente können sich sehr flach an das Wellrohr anlegen. Ein Gemisch aus Monofilamenten und Multifilamenten kann zu einer Vereinigung der genannten Vorteile führen, wobei es sowohl denkbar sein kann, dass ein einzelner jeweiliger Faden ein Monofilament eines ersten Materials und Multifilamente eines zweiten Materials umfasst, als auch, dass es neben Fäden, welche rein als Monofilament ausgebildet sind, Fäden gibt, welche als Multifilamente ausgebildet sind.

Ein jeweiliger Faden kann Polyethylenterephthalat und/oder Aramid umfassen. Durch das Vorsehen von Fäden aus/mit Polyethylenterephthalat und/oder Aramid können die belastungsabhängigen Eigenschaften eines Fadens weiter verbessert werden. Insbesondere für die Verwendung von Aramid-Fäden kann es ebenfalls denkbar sein Multifilament-Fäden zu verwenden. Multifile Fäden können eine größere Überdeckung des Wellrohrs bzw. eine kleinere Maschenweite zwischen den Fäden ermöglichen.

Insbesondere kann ein jeweiliger Faden einen Elastizitätsmodul von wenigstens 3 kN/mm², insbesondere von wenigstens 4,5 kN/mm² aufweisen.

Damit das Geflecht einer Durchmesser- und Längenänderungen in einer gewünschten Weise widerstehen kann, kann es vorteilhaft sein, einen hohen Elastizitätsmodul für die Fäden des Geflechts zu wählen. Dabei kann aber auch zu berücksichtigen sein, dass die Fäden dennoch eine gewisse Elastizität aufweisen, um einen Bruch der Fäden beim Einsatz der Hochdruck-Fluidleitung zu verhindern.

**In** einer Weiterbildung der vorliegenden Erfindung kann die Hochdruck-Fluidleitung ferner eine äußere Schutzschicht umfassen, welche an der Außenseite des Wellrohrs angeordnet ist, wobei die äußere Schutzschicht insbesondere Silikon umfassen kann. Die äußere Schutzschicht kann diverse schützende Eigenschaften aufweisen, wie beispielsweise einen Abriebschutz und/oder einen Brandschutz für das Geflecht. Ferner kann die äußere Schutzschicht gewährleisten, dass die Fäden an Ort und Stelle gehalten werden, und so verhindern, dass die Fäden beispielsweise bei Druckbelastung der Fluidleitung von einem jeweiligen Wellenberg geschoben werden. Die äußere Schutzschicht kann insbesondere flexibel oder sogar elastisch ausgebildet sein, so dass die äußere Schutzschicht einer Biegung der Hochdruck-Fluidleitung folgen kann ohne beschädigt zu werden. Multifile Fäden können auch eine verbesserte Haftung der äußeren Schutzschicht aufgrund der größeren Oberfläche der Fäden, im Vergleich zu Monofilamenten, ermöglichen.

Insbesondere kann die äußere Schutzschicht das Geflecht mit dem Wellrohr zumindest abschnittsweise verbinden. Gerade in Bezug auf die zweite Alternative der vorliegenden Erfindung, gemäß welcher das Geflecht im Bereich von Wellentälern eine kleinere Maschengröße aufweist als im Bereich von Wellenbergen, kann die äußere Schutzschicht das Geflecht so in dem Bereich der Wellentäler halten oder sogar fixieren. Die äußere Schutzschicht kann das Geflecht auch vollständig mit dem Wellrohr verbinden.

Hierbei kann das Geflecht in die äußere Schutzschicht eingebettet sein. Das heißt, die Fäden des Geflechts können im Wesentlichen vollumfänglich im Kontakt mit der äußeren Schutzschicht sein. Hiervon kann ein Kontaktbereich der Fäden des Geflechts mit anderen Fäden oder mit dem Wellrohr ausgenommen sein.

Das Geflecht ist erfindungsgemäß den Wellenbergen und Wellentälern im Wesentlichen folgend auf dem Wellrohr angeordnet. Obwohl dieses Merkmal natürlich auf beide Alternativen der vorliegenden Erfindung anwendbar ist, kann dies insbesondere bei der zweiten Alternative der vorliegenden Erfindung dadurch realisiert werden, dass das Geflecht im Bereich von Wellentälern eine kleinere Maschengröße aufweist als im Bereich von Wellenbergen.

Ferner kann ein Profil des Wellrohrs einen im Wesentlichen sinusförmigen Verlauf aufweisen. Durch den stetigen, sinusförmigen Verlauf der Wandung des Wellrohrs kann eine Druckbelastung gleichmäßig über das Wellrohr verteilt werden. Der sinusförmige Verlauf des Wellrohrs kann den weiteren Vorteil aufweisen, dass die einzelnen Fäden erheblich weniger gebogen werden als beispielsweise bei einem trapezförmigen Profil. Insbesondere in Kombination mit multifilen Aramid-Fäden, welche eher spröde sind, kann dies sehr vorteilhaft sein.

Das Wellrohr kann aus einem thermoplastischen Kunststoff, insbesondere aus Polyamid, gefertigt sein.

Beispielsweise kann eine Wandung des Wellrohrs einen mehrschichtigen Aufbau aufweisen, welcher insbesondere zwei Schichten umfasst. So kann das Wellrohr eine radial innere und eine radial äußere Schicht aufweisen. Insbesondere können die beiden Schichten voneinander unterschiedliche Eigenschaften in Bezug auf Schlagfestigkeit, chemische Beständigkeit, Elastizität oder dergleichen aufweisen. Eine der beiden voranstehend genannten Schichten oder eine weitere Schicht kann insbesondere als Barriereschicht ausgebildet sein. Eine Barriereschicht kann beispielsweise aus Ethylen-Vinylalkohol-Copolymer (EVOH) gefertigt sein.

Ein weiterer Aspekt der vorliegenden Erfindung betrifft eine Rohranordnung für Hochdruckanwendungen mit einer erfindungsgemäßen Hochdruck-Fluidleitung und jeweils einem Verbinder, insbesondere einem Pressverbinder, an den beiden Enden der Hochdruck-Fluidleitung, wobei die Verbinder jeweils dazu eingerichtet sind, den mehrlagigen Aufbau der Hochdruck-Fluidleitung, welcher wenigstens das Wellrohr und das Geflecht umfasst, aneinander kraft- und/oder formschlüssig zu fixieren.

Die vorliegende Erfindung wird im Folgenden anhand eines Ausführungsbeispiels mit Bezug auf die begleitenden Zeichnungen in größerem Detail beschrieben werden. Es stellt dar:
- Figur 1: eine perspektivische Ansicht einer Ausführungsform der erfindungsgemäßen Fluidleitung;
- Figur 2: eine Seitenquerschnittsansicht der erfindungsgemäßen Fluidleitung aus Figur 1.

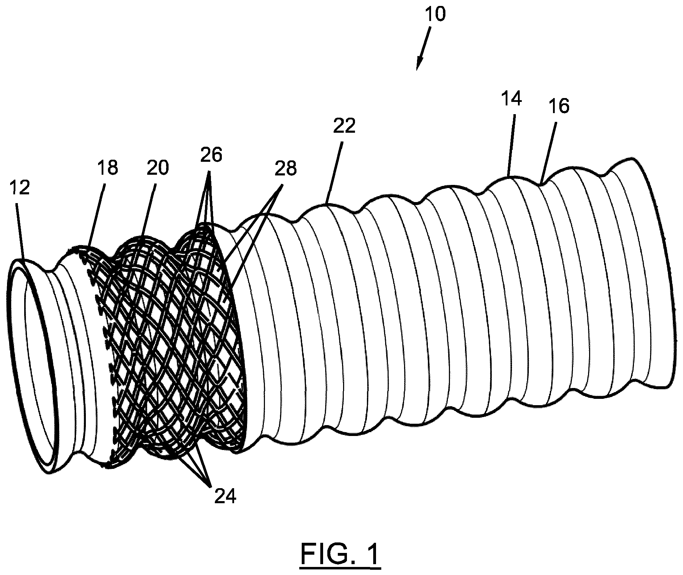

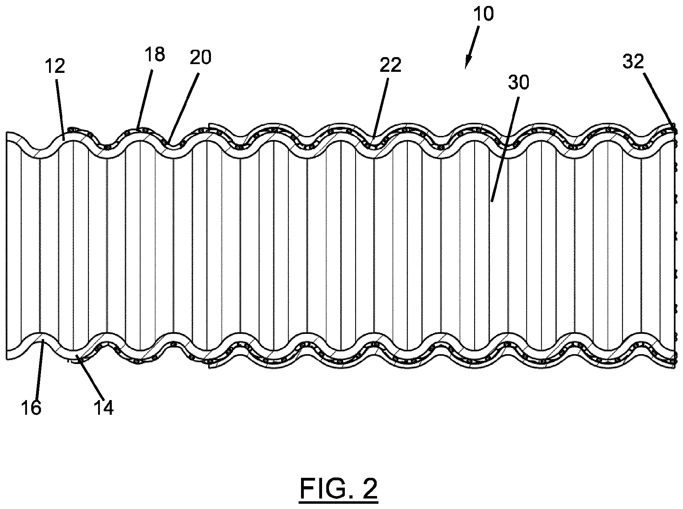

In Figur 1 ist eine erfindungsgemäße Fluidleitung allgemein mit dem Bezugszeichen 10 bezeichnet. Die Fluidleitung 10 umfasst ein Wellrohr 12, dessen Wandung eine Abfolge von Wellenbergen 14 und Wellentälern 16 aufweist (siehe auch Figur 2).

An der Außenseite des Wellrohrs 12 ist ein Geflecht 18 angeordnet, welches eine Mehrzahl von Fäden 20 umfasst. Das Geflecht 18 ist in der hier dargestellten Ausführungsform derart an der Außenseite des Wellrohrs 12 angeordnet, dass es dem Verlauf der Wellenberge 14 und der Wellentäler 16 in engem Kontakt damit folgt. Nicht erfindungsgemäß ist es ebenfalls denkbar, dass das Geflecht 18 an den Wellenbergen 14 des Wellrohrs 12 anliegt, aber im Bereich der Wellentäler 16 einen vorbestimmten Abstand zu der Wandung des Wellrohrs 12 aufweist. In einer nicht erfindungsgemäßen denkbaren Ausführungsform kann sich das Geflecht 18 auch von einem Wellenberg 14 zu einem benachbarten Wellenberg 14 im Wesentlichen gerade erstrecken, das heißt das Gesamtgebilde des Geflechts 18 (ungeachtet der einzelnen Fäden 20) kann einen Wellenberg 14 mit einem benachbarten Wellenberg 14 in einer kürzesten Distanz verbinden.

In Figur 2 ist ferner zu erkennen, dass die Fluidleitung 10 eine äußere Schutzschicht 22 umfasst, welche an einer Außenseite des Geflechts 18 angeordnet ist. Die äußere Schutzschicht 22 kann zum Beispiel aus einem Silikon gebildet sein, welches auf das das Wellrohr 12 umhüllende Geflecht 18 aufgetragen wird. Insbesondere kann sich die äußere Schutzschicht 22 dabei mit den Fäden 20 des Geflechts 18 derart verbinden, dass die Fäden 18 zumindest teilweise in der äußeren Schutzschicht 22 eingebettet werden.

An dem linken Ende der in Figur 2 dargestellten Fluidleitung 10 enden die einzelnen Schichten der Fluidleitung 10, nämlich die Wandung des Wellrohrs 12, das Geflecht 18 und die äußere Schutzschicht 22, mit einem gewissen Abstand zueinander, um den Aufbau der erfindungsgemäßen Fluidleitung 10 zu verdeutlichen. Vorteilhafterweise können die Schichten natürlich gemeinsam an einem Ende der Fluidleitung 10 enden, wie in Figur 2 an dem rechten Ende der Fluidleitung 10 dargestellt.

Mit erneutem Bezug auf Figur 1, ist zu erkennen, dass eine erste Gruppe 24 von Fäden 20 in einem ersten Drehsinn um das Wellrohr 12 verlaufen (in Figur 1 zum Beispiel von rechts unten nach links oben), und dass eine zweite Gruppe 26 von Fäden 20 in einem zweiten Drehsinn um das Wellrohr 12 verlaufen (in Figur 1 zum Beispiel von rechts oben nach links unten). Die zwischen einzelnen Fäden 20 frei bleibenden Maschen 28 sind hier im Wesentlichen rautenförmig. Hierdurch bildet das Geflecht 18 eine Art Scherenmechanismus aus, das heißt, wenn das Wellrohr 12 und damit das Geflecht 18 verlängert wird (beispielsweise in den Figuren 1 und 2 in einer Richtung nach links und nach rechts gedehnt wird), dann verringert sich aufgrund der Struktur des Geflechts 18 auch der Durchmesser des Geflechts 18.

Wirkt also ein in der Fluidleitung 10, das heißt in einem darin gebildeten Fluidströmungskanal 30, herrschender Fluiddruck derart auf das Wellrohr 12 ein, dass sich das Wellrohr 12 verlängern möchte, so erzeugt das Geflecht 18 eine Kraft auf die Wandung des Wellrohrs 12 in Richtung einer Durchmesserreduktion des Geflechts 18. Aufgrund der Tatsache, dass der Durchmesserreduktion des Geflechts 18 sowohl der Fluiddruck in dem Fluidströmungskanal 30 der Fluidleitung 10 als auch die begrenzte Komprimierbarkeit des Materials des Wellrohrs 12 entgegenwirkt, wird eine weitere Verlängerung der Fluidleitung 10 dadurch unterbunden, dass diese entgegenwirkenden Kräfte eine weitere Durchmesserreduktion des Geflechts 18 verhindern.

Um dabei verhindern zu können, dass das Geflecht 18 eine vorbestimmte Längenänderung, aufgrund einer Dehnbarkeit der Fäden 20 selbst, zulässt, sollte der Elastizitätsmodul der Fäden 20 möglichst hoch gewählt werden, wobei zugleich darauf geachtet werden sollte, dass die Fäden 20 nicht zu spröde werden, so dass ein Bruch der Fäden 20 verhindert werden kann.

In der gezeigten Ausführungsform sind das Wellrohr 12 und das Geflecht 18 an den beiden Längsenden der Fluidleitung 10 miteinander verbunden, wobei in Figur 2 dies nur für das rechte Längsende 32 der Fluidleitung 10 gezeigt ist.

## Patentansprüche

1. Hochdruck-Fluidleitung (10), umfassend
ein Wellrohr (12), welches in seinem Inneren einen Fluidströmungskanal (30) definiert, und dessen Wandung, parallel zu der Erstreckungsrichtung des Fluidströmungskanals (30), eine Abfolge von Wellenbergen (14) und Wellentälern (16) umfasst, und
ein Geflecht (18) aus Fäden (20), welches auf einen Außenumfang des Wellrohrs (12) aufgebracht ist,
wobei das Geflecht (18) eng an dem Außenumfang des Wellrohrs (12) anliegt,
wobei das Geflecht (18) über das gesamte Wellrohr (12) hinweg einen im Wesentlichen konstanten Flechtwinkel aufweist,
wobei das Geflecht (18) und das Wellrohr (12) wenigstens an zwei voneinander getrennten Stellen, insbesondere im Bereich der beiden Längsenden (32) des Wellrohrs (12), derart miteinander verbunden sind, dass eine Streckung des Wellrohrs (12) in Längsrichtung mit einer Durchmesserreduktion des Geflechts (18) einhergeht,
**dadurch gekennzeichnet, dass** das Geflecht (18) den Wellenbergen (14) und Wellentälern (16) im Wesentlichen folgend auf dem Wellrohr (12) angeordnet ist, wobei das Geflecht (18) derart an der Außenseite des Wellrohrs (12) angeordnet ist, dass es dem Verlauf der Wellenberge (14) und der Wellentäler (16) in engem Kontakt damit folgt.

2. Hochdruck-Fluidleitung (10), umfassend
ein Wellrohr (12), welches in seinem Inneren einen Fluidströmungskanal (30) definiert, und dessen Wandung, parallel zu der Erstreckungsrichtung des Fluidströmungskanals (30), eine Abfolge von Wellenbergen (14) und Wellentälern (16) umfasst, und
ein Geflecht (18) aus Fäden (20), welches auf einen Außenumfang des Wellrohrs (12) aufgebracht ist,
wobei das Geflecht (18) eng an dem Außenumfang des Wellrohrs (12) anliegt, wobei das Geflecht (18) über das gesamte Wellrohr (12) hinweg einen im Wesentlichen konstanten Flechtwinkel aufweist,
wobei das Geflecht (18) im Bereich von Wellentälern (16) eine kleinere Maschengröße (28) aufweist als im Bereich von Wellenbergen (14),
wobei die Hochdruck-Fluidleitung (10) dazu eingerichtet ist, dass eine Streckung des Wellrohrs (12) in Längsrichtung mit einer Durchmesserreduktion des Geflechts (18) einhergeht,
**dadurch gekennzeichnet, dass** das Geflecht (18) den Wellenbergen (14) und Wellentälern (16) im Wesentlichen folgend auf dem Wellrohr (12) angeordnet ist,
wobei das Geflecht (18) derart an der Außenseite des Wellrohrs (12) angeordnet ist, dass es dem Verlauf der Wellenberge (14) und der Wellentäler (16) in engem Kontakt damit folgt.

3. Hochdruck-Fluidleitung (10) nach Anspruch 1 oder 2,
**dadurch gekennzeichnet, dass** der Flechtwinkel im Bereich von 30° bis 60°, insbesondere bei etwa 45°, liegt.

4. Hochdruck-Fluidleitung (10) nach einem der vorhergehenden Ansprüche,
**dadurch gekennzeichnet, dass** das Geflecht (18) eine erste Gruppe (24) an Fäden (20) und eine zweite Gruppe (26) an Fäden (20) umfasst, wobei die erste Gruppe (24) an Fäden (20) und die zweite Gruppe (26) an Fäden (20) in entgegengesetzten Wicklungsrichtungen um das Wellrohr (12) verlaufen.

5. Hochdruck-Fluidleitung (10) nach einem der vorhergehenden Ansprüche,
**dadurch gekennzeichnet, dass** ein jeweiliger Faden (20) als Monofilament und/oder als Multifilament ausgebildet ist.

6. Hochdruck-Fluidleitung (10) nach einem der vorhergehenden Ansprüche,
**dadurch gekennzeichnet, dass** ein jeweiliger Faden (20) Polyethylenterephthalat und/oder Aramid umfasst.

7. Hochdruck-Fluidleitung (10) nach einem der vorhergehenden Ansprüche,
**dadurch gekennzeichnet, dass** ein jeweiliger Faden (20) einen Elastizitätsmodul von wenigstens 3 kN/mm², insbesondere von wenigstens 4,5 kN/mm² aufweist.

8. Hochdruck-Fluidleitung (10) nach einem der vorhergehenden Ansprüche,
**dadurch gekennzeichnet, dass** die Hochdruck-Fluidleitung (10) ferner eine äußere Schutzschicht (22) umfasst, welche an der Außenseite des Wellrohrs (12) angeordnet ist, wobei die äußere Schutzschicht (22) insbesondere Silikon umfasst.

9. Hochdruck-Fluidleitung (10) nach dem vorhergehenden Anspruch,
**dadurch gekennzeichnet, dass** die äußere Schutzschicht (22) das Geflecht (18) mit dem Wellrohr (12) zumindest abschnittsweise verbindet.

10. Hochdruck-Fluidleitung (10) nach Anspruch 8 oder 9,
**dadurch gekennzeichnet, dass** das Geflecht (18) in die äußere Schutzschicht (22) eingebettet ist.

11. Hochdruck-Fluidleitung (10) nach einem der vorhergehenden Ansprüche, **dadurch gekennzeichnet, dass** ein Profil des Wellrohrs (12) einen im Wesentlichen sinusförmigen Verlauf aufweist.

12. Hochdruck-Fluidleitung (10) nach einem der vorhergehenden Ansprüche, **dadurch gekennzeichnet, dass** das Wellrohr (12) aus einem thermoplastischen Kunststoff, insbesondere aus Polyamid, gefertigt ist.

13. Hochdruck-Fluidleitung (10) nach einem der vorhergehenden Ansprüche, **dadurch gekennzeichnet, dass** eine Wandung des Wellrohrs (12) einen mehrschichtigen Aufbau aufweist, welcher insbesondere zwei Schichten umfasst.

14. Rohranordnung für Hochdruckanwendungen mit einer Hochdruck-Fluidleitung (10) nach einem der vorhergehenden Ansprüche und jeweils einem Verbinder, insbesondere einem Pressverbinder, an den beiden Enden der Hochdruck-Fluidleitung (10), wobei die Verbinder jeweils dazu eingerichtet sind, den mehrlagigen Aufbau der Hochdruck-Fluidleitung (10), welcher wenigstens das Wellrohr (12) und das Geflecht (18) umfasst, aneinander kraft- und/oder formschlüssig zu fixieren.

## Claims

1. High-pressure fluid line (10), comprising
a corrugated tube (12) which defines a fluid flow channel (30) in its interior, and whose wall, parallel to the direction of extension of the fluid flow channel (30), comprises a sequence of corrugation crests (14) and corrugation troughs (16), and
a braiding (18) made of threads (20), which is applied to an outer circumference of the corrugated tube (12),
wherein the braiding (18) lies tightly against the outer circumference of the corrugated tube (12),
wherein the braiding (18) has a substantially constant braiding angle over the entire length of the corrugated tube (12),
wherein the braiding (18) and the corrugated tube (12) are connected to each other at least at two separate locations, in particular in the region of the two longitudinal ends (32) of the corrugated tube (12), in such a way that stretching of the corrugated tube (12) in the longitudinal direction is accompanied by a reduction in the diameter of the braiding (18),
**characterised in that** the braiding (18) is arranged on the corrugated tube (12) in a manner substantially following the wave crests (14) and wave troughs (16), wherein the braiding (18) is arranged on the outer side of the corrugated tube (12) in such a way that it follows in close contact the course of the corrugation crests (14) and the corrugation troughs (16).

2. High-pressure fluid line (10), comprising
a corrugated tube (12) which defines a fluid flow channel (30) in its interior, and whose wall, parallel to the direction of extension of the fluid flow channel (30), comprises a sequence of corrugation crests (14) and corrugation troughs (16), and
a braiding (18) of threads (20), which is applied to an outer circumference of the corrugated tube (12),
wherein the braiding (18) lies tightly against the outer circumference of the corrugated tube (12), wherein the braiding (18) has a substantially constant braiding angle over the entire corrugated tube (12),
whereby the braiding (18) has a smaller mesh size (28) in the region of corrugation troughs (16) than in the region of corrugation crests (14), wherein the high-pressure fluid line (10) is arranged in such a way that stretching of the corrugated tube (12) in the longitudinal direction is accompanied by a reduction in the diameter of the braiding (18),
**characterised in that** the braiding (18) is arranged on the corrugated tube (12) in a manner substantially following the course of the corrugation crests (14) and corrugation troughs (16), wherein the braiding (18) is arranged on the outer side of the corrugated tube (12) in such a way that it follows in close contact the course of the corrugation crests (14) and the corrugation troughs (16)

3. High-pressure fluid line (10) according to claim 1 or 2,
**characterised in that** the braiding angle is in the range of 30° to 60°, in particular is approximately 45°.

4. High-pressure fluid line (10) according to one of the preceding claims,
**characterised in that** the braiding (18) comprises a first group (24) of threads (20) and a second group (26) of threads (20), wherein the first group (24) of thread (20) and the second group (26) of thread (20) run in opposite winding directions around the corrugated tube (12).

5. High-pressure fluid line (10) according to any one of the preceding claims, **characterised in that** each thread (20) is formed as a monofilament and/or as a multifilament.

6. High-pressure fluid line (10) according to any one of the preceding claims, **characterised in that** each thread (20) comprises polyethylene terephthalate and/or aromatic polyamide.

7. High-pressure fluid line (10) according to any one of the preceding claims, **characterised in that** each thread (20) has a modulus of elasticity of at least 3 kN/mm², in particular of at least 4.5 kN/mm².

8. High-pressure fluid line (10) according to any one of the preceding claims, **characterised in that** the high-pressure fluid line (10) further comprises an external protective layer (22) which is arranged on the outer side of the corrugated tube (12), wherein the external protective layer (22) comprises in particular silicone.

9. High-pressure fluid line (10) according to the preceding claim,
**characterised in that** the external protective layer (22) connects the braiding (18) to the corrugated tube (12) at least section in sections.

10. High-pressure fluid line (10) according to claim 8 or 9,
**characterised in that** the braiding (18) is embedded in the external protective layer (22).

11. High-pressure fluid line (10) according to one of the preceding claims, **characterised in that** a profile of the corrugated tube (12) has a substantially sinusoidal shape.

12. High-pressure fluid line (10) according to any of the preceding claims, **characterised in that** the corrugated tube (12) is made of a thermoplastic material, in particular of polyamide.

13. High-pressure fluid line (10) according to any of the preceding claims, **characterised in that** one wall of the corrugated tube (12) has a multilayer structure, which in particular comprises two layers.

14. Tube arrangement for high-pressure applications with a high-pressure fluid line (10) according to any of the preceding claims and in each case with a connector, in particular a crimp connector, on the two ends of the high-pressure fluid line (10), wherein the connectors are each configured to fix the multilayer structure of the high-pressure fluid line (10), comprising at least the corrugated tube (12) and the braiding (18), to one another in a positive engagement and/or frictional manner.

## Revendications

1. Conduite de fluide haute pression (10) comprenant :
un tube ondulé (12) qui définit un canal d'écoulement de fluide (30) à l'intérieur, et dont la paroi présente, parallèlement à la direction d'extension du canal d'écoulement de fluide (30), une succession de crêtes d'ondulation (14) et de creux d'ondulation (16), et
une tresse (18) de fils (20) appliquée sur la circonférence extérieure du tube ondulé (12),
dans laquelle
la tresse (18) s'applique étroitement contre la circonférence extérieure du tube ondulé (12),
la tresse (18) présente un angle de tressage sensiblement constant sur la totalité du tube ondulé (12),
la tresse (18) et le tube ondulé (12) sont reliés entre eux en au moins deux points séparés l'un de l'autre, en particulier au niveau des deux extrémités longitudinales (32) du tube ondulé (12), de sorte que l'étirement du tube ondulé (12) en direction longitudinale soit accompagné d'une réduction du diamètre de la tresse (18),
**caractérisée en ce que** la tresse (18) est disposée sur le tube ondulé (12) en suivant sensiblement les crêtes d'ondulation (14) et les creux d'ondulation (16), la tresse (18) étant disposée sur la face extérieure du tube ondulé (12) de manière à suivre le tracé des crêtes d'ondulation (14) et des creux d'ondulation (16) en étant étroitement en contact avec ceux-ci.

2. Conduite de fluide haute pression (10) comprenant :
un tube ondulé (12) qui définit un canal d'écoulement de fluide (30) à l'intérieur et dont la paroi présente, parallèlement à la direction d'extension du canal d'écoulement de fluide (30), une succession de crêtes d'ondulation (14) et de creux d'ondulation (16), et
une tresse (18) de fils (20) appliquée sur la circonférence extérieure du tube ondulé (12),
dans laquelle
la tresse (18) s'applique étroitement contre la circonférence extérieure du tube ondulé (12),
la tresse (18) présente un angle de tressage sensiblement constant sur la totalité du tube ondulé (12),
la tresse (18) présente un maillage (28) plus fin dans la zone des creux d'ondulation (16) que dans la zone des crêtes d'ondulation (14),
la conduite de fluide haute pression (10) est conçue de telle sorte que l'étirement du tube ondulé (12) dans la direction longitudinale soit accompagné d'une réduction du diamètre de la tresse (18),
**caractérisée en ce que** la tresse (18) est disposée sur le tube ondulé (12) en suivant sensiblement les crêtes d'ondulation (14) et les creux d'ondulation (16), la tresse (18) étant disposée sur la face extérieure du tube ondulé (12) de manière à suivre le tracé des crêtes d'ondulation (14) et des creux d'ondulation (16) en étant étroitement en contact avec ceux-ci.

3. Conduite de fluide haute pression (10) selon la revendication 1 ou 2, **caractérisée en ce que** l'angle de tressage est dans la plage de 30° à 60°, et est en particulier d'environ 45°.

4. Conduite de fluide haute pression (10) selon l'une des revendications précédentes,
**caractérisée en ce que** la tresse (18) comprend un premier groupe (24) de fils (20) et un deuxième groupe (26) de fils (20), le premier groupe (24) de fils (20) et le deuxième groupe (26) de fils (20) s'étendant dans des sens d'enroulement opposés autour du tube ondulé (12).

5. Conduite de fluide haute pression (10) selon l'une des revendications précédentes,
**caractérisée en ce que** chaque fil (20) est réalisé la sous forme d'un monofilament et/ou d'un multifilament.

6. Conduite de fluide haute pression (10) selon l'une des revendications précédentes,
**caractérisée en ce que** chaque fil (20) comprend du polyéthylène téréphtalate et/ou de l'aramide.

7. Conduite de fluide haute pression (10) selon l'une des revendications précédentes,
**caractérisée en ce que** chaque fil (20) présente un module d'élasticité d'au moins 3 kN/mm², et en particulier d'au moins 4,5 kN/mm².

8. Conduite de fluide haute pression (10) selon l'une des revendications précédentes,
**caractérisée en ce que** la conduite de fluide haute pression (10) comprend en outre une couche protectrice extérieure (22) disposée sur la face extérieure du tube ondulé (12), en particulier, la couche protectrice extérieure (22) comprenant du silicone.

9. Conduite de fluide haute pression (10) selon la revendication précédente, **caractérisée en ce que** la couche protectrice extérieure (22) relie au moins localement la tresse (18) au tube ondulé (12).

10. Conduite de fluide haute pression (10) selon la revendication 8 ou 9, **caractérisée en ce que** la tresse (18) est noyée dans la couche protectrice extérieure (22).

11. Conduite de fluide haute pression (10) selon l'une des revendications précédentes,
**caractérisée en ce que** le profil du tube ondulé (12) présente un tracé sensiblement sinusoïdal.

12. Conduite de fluide haute pression (10) selon l'une des revendications précédentes,
**caractérisée en ce que** le tube ondulé (12) est réalisé en matériau thermoplastique, en particulier en polyamide.

13. Conduite de fluide haute pression (10) selon l'une des revendications précédentes,
**caractérisée en ce qu'**une paroi du tube ondulé (12) présente une structure multicouche qui comprend en particulier deux couches.

14. Agencement de tuyauterie pour applications haute pression comportant une conduite de fluide haute pression (10) selon l'une des revendications précédentes et un connecteur respectif, en particulier un connecteur à serrer, à chacune des deux extrémités de la conduite de fluide haute pression (10), dans lequel les connecteurs sont chacun conçus pour fixer la structure multicouche de la conduite de fluide haute pression (10), qui comprend au moins le tube ondulé (12) et la tresse (18), l'un à l'autre par liaison en coopération de force et/ou de forme.
